# EUROPÄISCHE PATENTSCHRIFT

(11) **EP 0 982 524 B1**
(45) Veröffentlichungstag und Bekanntmachung des Hinweises auf die Patenterteilung: **16.05.2001**
(21) Anmeldenummer: 99116376.7
(22) Anmeldetag: 20.08.1999
(51) Int. Cl.: F16L 25/00, F16L 11/127, H01R 4/60, H01R 4/64

(54) **Einrichtung zum elektrisch leitenden Kontaktieren eines elektrisch leitenden Teiles eines insbesondere länglichen, beispielweise im wesentlichen zylindrischen Körpers, beispielsweise eines Rohres oder eines Kabels**
Device for electrically contacting an electrically contactive part of an in particular elongated for example essentially cylindrical body, for example of a pipe or of a cable
Dispositif pour contacter électriquement une portion électroconductive d'un corps, notamment allongé, par exemple cylindrique, notamment d' un tube ou d' un câble

(30) Priorität: 24.08.1998 DE 29815063 U; 09.09.1998 DE 19841199
(43) Veröffentlichungstag der Anmeldung: 01.03.2000
(73) Patentinhaber: Karin Daume Maschinenteile GmbH & Co. KG, 30938 Burgwedel (DE)
(72) Erfinder: Daume, Britta, 30938 Burgwedel (DE)
(74) Vertreter: Leine, Sigurd, Dipl.-Ing.

(56) Entgegenhaltungen:
- EP-A- 0 466 276
- DE-A- 2 225 060
- DE-A- 4 124 968
- US-A- 2 279 866
- US-A- 3 749 814

## Beschreibung

Die Erfindung betrifft eine Einrichtung der im Oberbegriff des Anspruchs 1 genannten Art zum elektrisch leitenden Kontaktieren eines abschnittsweise abisolierten Außenleiters eines Koaxialkabels.

Eine Einrichtung der betreffenden Art ist durch EP 0 744 788 A1 bekannt. Sie dient zum Herstellen einer elektrisch leitenden Verbindung zwischen einem Rohr oder einem abisolierten Außenleiter eines Koaxialkabels und einem Leiter, beispielsweise einem Erdungskabel. Die bekannte Einrichtung weist einen als Schelle ausgebildeten Grundkörper auf, der ein bandförmiges Metallteil aufweist, das in ein elastisches Material, beispielsweise Gummi, eingebettet ist, das in Axialrichtung des Grundkörpers zueinander beabstandete Dichtlippen bildet. Die Dichtlippen weisen Anlageflächen auf, mit denen der Grundkörper in Montageposition an dem zu kontaktierenden Körper anliegt, wobei die Dichtlippen einen in Montageposition zwischen dem Grundkörper und dem zu kontaktierenden Körper gebildeten Raum gegen ein Eindringen von Luft und/oder Feuchtigkeit abdichten. Die bekannte Einrichtung weist ferner Kontaktmittel zum Herstellen einer elektrisch leitenden Verbindung zwischen dem zu kontaktierenden Körper und einem Leiter, beispielsweise einem Erdungskabel auf. Die Kontaktmittel sind bei der bekannten Einrichtung durch ein separates Zwischenstück in Form eines Bandes aus einem Kupfergeflecht gebildet, das in Montageposition einerseits an dem zu kontaktierenden Körper und andererseits an der dem zu kontaktierenden Körper zugewandten Seite des bandförmigen Metallteiles des Grundkörpers anliegt. Das Zwischenstück ist durch Klebstoff oder eine Schweißverbindung punktförmig mit dem Grundkörper verbunden.

Ein Nachteil der bekannten Einrichtung besteht darin, daß ihre Herstellung aufgrund des separaten Zwischenstückes, das in einem zusätzlichen Arbeitsgang mit dem Grundkörper verbunden werden muß, aufwendig und damit teuer ist. Nachteilig ist ferner, daß aufgrund der punktförmigen Verbindung des Zwischenstückes mit dem Grundkörper die Gefahr besteht, daß das Zwischenstück beim Verbinden mit dem Grundkörper während der Herstellung der Einrichtung verrutscht und somit nicht in der gewünschten Lage an dem Grundkörper fixiert ist. Dies kann bei der Montage der erfindungsgemäßen Einrichtung dazu führen, daß das Zwischenstück von dem Grundkörper gelöst werden muß, um in die gewünschte Lage gebracht zu werden. Dies ist aufwendig und erhöht die Montagekosten. Aufgrund der lediglich punktförmigen Verbindung besteht ferner die Gefahr, daß sich das Zwischenstück von dem Grundkörper löst und verloren geht. Vor der Montage der bekannten Einrichtung muß in diesem Falle ein neues Zwischenstück beschafft werden. Dies ist aufwendig und erhöht sowohl die Material- als auch die Montagekosten.

Durch EP-A-0 466 276 ist eine Einrichtung zum elektrisch leitenden Kontaktieren eines elektrisch leitenden Teiles eines Kabels bekannt, die einen Grundkörper mit einer Anlagefläche zur Anlage an dem zu kontaktierenden Körper und Kontaktmittel zum Herstellen einer elektrisch leitenden Verbindung zwischen dem zu kontaktierenden Körper und einem Leiter aufweist. Bei der aus der Druckschrift bekannten Einrichtung (vgl. Fig. 5 der Druckschrift) sind die Kontaktmittel durch eine dünne Schneidplatte gebildet, die zur Herstellung einer elektrisch leitenden Verbindung zwischen einem Anschlußkabel und einem in einer Isolierung aufgenommenen elektrischen Leiter in Radialrichtung des Kabels in die Isolierung eingepreßt wird, so daß sie in die Isolierung einschneidet, bis ein elektrisch leitender Kontakt mit dem Leiter des Kabels hergestellt ist.

Durch US-A-3 749 814 ist ein elektrisch leitender Schlauch bekannt, der eine elektrisch leitende Schicht aufweist, die zwischen einer radial inneren elektrisch isolierenden Schicht des Schlauches und einer radial äußeren elektrisch isolierenden Schicht des Schlauches aufgenommen ist. Zum Herstellen einer elektrisch leitenden Verbindung zwischen der elektrisch leitenden Schicht des Schlauches und einem Anschlußkabel dient eine Schraube, die sich durch eine radiale Bohrung in der äußeren Schicht bis zu der elektrisch leitenden Schicht des Schlauches erstreckt.

Durch US-A-2 279 866 ist eine Klemme zum Halten und Erden eines metallischen Rohres bekannt.

Der Erfindung liegt die Aufgabe zugrunde, eine Einrichtung der im Oberbegriff des Anspruchs 1 genannten Art anzugeben, die die Nachteile der bekannten Einrichtung nicht aufweist, die also einfach und kostengünstig herstellbar und montierbar ist.

Diese Aufgabe wird durch die im Anspruch 1 angegebene Lehre gelöst.

Die erfindungsgemäße Lehre löst sich von dem Gedanken, die Kontaktmittel zum Herstellen einer elektrisch leitenden Verbindung zwischen dem zu kontaktierenden Körper und einem Leiter, beispielsweise einem Erdungskabel, durch ein mit dem Grundkörper punktförmig verbundenes Zwischenstück zu bilden. Ihr liegt vielmehr der Gedanke zugrunde, die Kontaktmittel durch einen Teil des Grundkörpers zu bilden. Hierzu sieht die erfindungsgemäße Lehre vor, daß der Grundkörper wenigstens einen Kontaktvorsprung aus elektrisch leitfähigem Material aufweist. Ein separates Zwischenstück, beispielsweise aus einem Band aus Kupfergeflecht, ist auf diese Weise nicht mehr erforderlich, so daß die Herstellung der erfindungsgemäßen Einrichtung einfacher und kostengünstiger gestaltet ist. Aufgrund der federnden Anlage des Kontaktvorsprunges an dem elektrisch leitenden Teil des zu kontaktierenden Körpers ist eine besonders sichere elektrische Verbindung erzielt. Außerdem sind durch die federnde Anlage des oder jedes Kontaktvorsprunges Bauteiltoleranzen ausgleichbar.

Da die Kontaktmittel durch einen Teil des Grundkörpers gebildet sind, besteht nicht die Gefahr, daß sie verloren gehen, wie dies bei der bekannten Einrichtung der Fall ist.

Form, Größe und Lage des oder jedes Kontaktvorsprunges sind entsprechend den jeweiligen Anforderungen in weiten Grenzen wählbar. Ferner ist die Zahl der Kontaktvorsprünge in weiten Grenzen wählbar. Eine Weiterbildung der erfindungsgemäßen Lehre sieht vor, daß der oder jeder Kontaktvorsprung durch ein mit dem Grundkörper innig verbundenes Teil gebildet ist. Beispielsweise kann der oder jeder Kontaktvorsprung durch ein Blechteil gebildet sein, das mit einem Blechteil des Grundkörpers durch Schweißen innig verbunden ist und das in Richtung auf den zu kontaktierenden Körper von dem Grundkörper vorsteht. Durch die innige Verbindung des den Kontaktvorsprung bildenden Teiles mit dem Grundkörper ist dieses Teil unverlierbar an dem Grundkörper gehalten. Durch Schweißen ist eine innige Verbindung zwischen den beiden Teilen in einfacher und kostengünstiger Weise herstellbar, so daß die Herstellungskosten der erfindungsgemäßen Einrichtung gering sind.

Grundsätzlich kann der oder jeder Kontaktvorsprung aus einem beliebigen, elektrisch gut leitfähigen Material bestehen, solange der in Montageposition zwischen dem zu kontaktierenden Körper und einem mit dem Kontaktvorsprung elektrisch leitend verbundenen Leiter, beispielsweise einem Erdungskabel, gering genug ist, um eine Ableitung ggf. auftretender Ströme, beispielsweise bei einem Blitzeinschlag, von dem zu kontaktierenden Körper über das Erdungskabel sicherzustellen. Um diesen elektrischen Widerstand so gering wie möglich zu halten, ist es zweckmäßig, daß der oder jeder Kontaktvorsprung aus Metall besteht.

Die elektrisch leitende Verbindung zwischen dem oder jedem Kontaktvorsprung und dem Außenleiter des Koaxialkabels läßt sich durch Federmittel zum Vorspannen des oder jedes Kontaktvorsprunges in Richtung auf den Außenleiter des Koaxialkabels noch weiter verbessern, wie dies eine Ausführungsform vorsieht. Durch entsprechende Wahl der Vorspannung der Federmittel ist die Kraft, mit der der oder jeder Kontaktvorsprung in Montageposition an dem Außenleiter des Koaxialkabels anliegt, entsprechend den jeweiligen Anforderungen in weiten Grenzen wählbar.

Grundsätzlich kann der Grundkörper im wesentlichen starr ausgebildet sein. Eine zweckmäßige Weiterbildung sieht jedoch vor, daß der Grundkörper biegsam ausgebildet ist. Bei dieser Ausführungsform paßt sich der Grundkörper aufgrund seiner Biegsamkeit an die Oberfläche des zu kontaktierenden Körpers an. Dies ermöglicht eine Kontaktierung auch stark unebener oder gekrümmter Körper. Die zu kontaktierenden Körper können beliebig ausgebildet sein, beispielsweise plattenförmig, stabförmig, in beliebiger Weise gebogen oder gekrümmt oder rohrförmig mit beliebigem Querschnitt.

Eine besonders vorteilhafte Weiterbildung der vorgenannten Ausführungsform sieht vor, daß der oder jeder Kontaktvorsprung durch eine in dem Kontaktteil gebildete Profilierung gebildet ist. Besteht das Kontaktteil beispielsweise aus einem Metallband, so können in das Metallband zur Bildung des oder jedes Kontaktvorsprunges Profilierungen eingepreßt sein. Diese Ausführungsform ist einfach und kostengünstig herstellbar. Durch entsprechendes Pressen des Metallbandes sind Form und Größe des Kontaktvorsprunges in weiten Grenzen wählbar.

Eine Weiterbildung der vorgenannten Ausführungsform sieht vor, daß die oder jede Profilierung durch eine in Montageposition zu dem zu kontaktierenden Körper hin im Querschnitt konvexe, in der Draufsicht insbesondere kreisförmige Wölbung oder eine zu dem zu kontaktierenden Körper hin vorstehende Sicke gebildet ist. Beispielsweise kann der Kontaktvorsprung dadurch gebildet sein, daß in ein Metallband eine zu dem zu kontaktierenden Körper hin im Querschnitt konvexe, in der Draufsicht insbesondere kreisförmige Wölbung eingepreßt ist. Auf diese Weise ist der oder jeder Kontaktvorsprung bei der Herstellung der erfindungsgemäßen Einrichtung in besonders einfacher Weise ausbildbar. Bei der Montage der erfindungsgemäßen Einrichtung gelangt dieser Kontaktvorsprung zunächst im wesentlichen punktförmig und daran anschließend unter elastischer Verformung zunehmend flächig an dem zu kontaktierenden Körper zur Anlage, so daß in der gewünschten Weise eine sichere elektrisch leitende Verbindung erzielt ist. In entsprechender Weise können zur Bildung von Kontaktvorsprüngen Sicken beliebiger Form in das Metallband eingepreßt sein. Dadurch, daß die Kontaktvorsprünge bei dieser Ausführungsform durch Profilierungen gebildet sind, sind Durchbrüche in dem Grundkörper, durch die in Montageposition Luft und/oder Feuchtigkeit von außen in den Bereich der Kontaktierung eindringen könnte, vermieden. Zur Kontaktierung von Rohren kann die erfindungsgemäße Einrichtung beispielsweise ausschließlich aus einem metallischen Schellenband gebildet sein, an dessen in Montageposition dem zu kontaktierenden Rohr zugewandter Seite Dichtlippen gehalten sind. Eine derartige Ausführungsform ist besonders einfach und kostengünstig herstellbar.

Eine andere Weiterbildung sieht vor, daß der oder jeder Kontaktvorsprung durch eine zu der in Montageposition dem zu kontaktierenden Körper zugewandten Seite des Grundkörpers hin vorstehende Zunge gebildet ist, wobei die oder jede Zunge vorteilhafterweise aus dem Kontaktteil ausgestanzt sein kann, wie dies eine Weiterbildung vorsieht. Diese Ausführungsform ist ebenfalls besonders einfach und kostengünstig herstellbar.

Eine andere Weiterbildung sieht vor, daß ein Teil des Kontaktteiles aus dem Grundkörper zu dessen in Montageposition dem zu kontaktierenden Körper abgewandter Seite hin herausgeführt ist oder daß das Kontaktteil mit einem zu dieser Seite des Grundkörpers herausgeführten Teil elektrisch leitend verbunden ist. Bei dieser Ausführungsform ist in Montageposition der Einrichtung das Kontaktteil von außen kontaktierbar, beispielsweise durch Anschließen eines Erdungskabels an das herausgeführte Teil. Dies erleichtert die Montage der erfindungsgemäßen Einrichtung.

Eine andere Weiterbildung der vorgenannten Ausführungsform sieht vor, daß sich der oder jeder Kontaktvorsprung in Umfangsrichtung des Grundkörpers im wesentlichen über die gesamte Länge des Grundkörpers in dieser Richtung erstreckt. Auf diese Weise ist ein großflächiger Kontakt mit dem zu kontaktierenden Körper und damit eine sichere elektrisch leitende Verbindung erzielt. Durch die großflächige Anlage an dem zu kontaktierenden Körper beeinträchtigen Bauteiltoleranzen die elektrische Verbindung zwischen der Einrichtung und dem zu kontaktierenden Körper kaum.

Eine andere Weiterbildung sieht vor, daß wenigstens zwei in Umfangsrichtung des Grundkörpers zueinander beabstandete, vorzugsweise auf einer Umfangslinie angeordnete Kontaktvorsprünge vorgesehen sind. Auf diese Weise wird der zu kontaktierende Körper an mehreren Umfangsstellen kontaktiert.

Eine andere, besonders vorteilhafte Weiterbildung sieht vor, daß der Grundkörper einteilig und in Umfangsrichtung offen ausgebildet ist und an seinen freien Enden abgewinkelte und abgebogene Laschen aufweist, die in Montageposition miteinander verbindbar sind. Aufgrund der einteiligen Ausbildung des Grundkörpers ist die Montage der erfindungsgemäßen Einrichtung erleichtert. Durch Verbindung der Laschen miteinander ist die Einrichtung in schneller und einfacher Weise an dem zu kontaktierenden Körper befestigbar.

Die Laschen können in beliebiger geeigneter Weise miteinander verbunden, beispielsweise miteinander verschweißt werden. Eine vorteilhafte Weiterbildung sieht jedoch vor, daß die Laschen mittels einer Schraubvorrichtung oder einer Klemmvorrichtung miteinander verbindbar sind. Auf diese Weise ist die Montage der erfindungsgemäßen Einrichtung weiter vereinfacht. Außerdem ist bei dieser Ausführungsform die Verbindung der Laschen miteinander und damit die Verbindung der Einrichtung mit dem zu kontaktierenden Körper lösbar ausgebildet. Die erfindungsgemäße Einrichtung kann daher ggf. wiederverwendet werden.

Eine andere Ausführungsform sieht vor, daß der Grundkörper ein Teil aus elastischem Material aufweist, mit dessen in Montageposition dem zu kontaktierenden Körper zugewandter Seite das Kontaktteil verbunden ist. Ist der Grundkörper als Schelle ausgebildet, so wird das Teil aus elastischem Material beim Spannen der Schelle verformt und spannt dadurch das Kontaktteil in Richtung auf den zu kontaktierenden Körper vor, so daß eine besonders sichere elektrische Verbindung mit dem zu kontaktierenden Körper hergestellt ist.

Bei der vorgenannten Ausführungsform kann das Teil aus elastischem Material eine Beschichtung des Kontaktteiles bilden, oder das Kontaktteil kann wenigstens teilweise in das elastische Material eingebettet sein. Um die erfindungsgemäße Einrichtung in optischer Hinsicht günstiger zu gestalten und/oder gegen Umwelteinflüsse zu schützen, kann das Kontaktteil beispielsweise mit einer dünnen, ggf. auch farbigen Beschichtung versehen sein. Das Kontaktteil kann jedoch auch zur Erzielung einer elektrischen Isolation mit dem elastischen Material beschichtet oder in dieses eingebettet sein.

Das elastische Material ist entsprechend den jeweiligen Anforderungen in weiten Grenzen wählbar. Vorteilhaft ist es, wenn das elastische Material ein Elastomer, insbesondere eine thermoplastisches Elastomer, ist. Derartige Materialien sind kostengünstig und einfach verarbeitbar. Dies senkt die Kosten bei der Herstellung der erfindungsgemäßen Einrichtung. Es sind beliebige Elastomere verwendbar, beispielsweise vulkanisierter Kautschuk. Thermoplastische Elastomere sind aufgrund ihrer einfachen Verarbeitbarkeit besonders vorteilhaft.

Eine andere Weiterbildung sieht vor, daß das Kontaktteil Anschlußmittel zum Anschließen eines Leiters, beispielsweise eines Erdungskabels aufweist, derart, daß der Leiter mit dem in Montageposition an dem zu kontaktierenden Körper anliegenden Kontaktteil zum Herstellen einer elektrisch leitenden Verbindung zwischen dem Leiter und dem zu kontaktierenden Körper elektrisch leitend verbindbar ist. Durch die Anschlußmittel ist das Anschließen eines Leiters, beispielsweise eines Erdungskabels erleichtert.

Bei der Ausführungsform mit dem einteilig ausgebildeten Grundkörper und den Laschen sieht eine Weiterbildung der vorgenannten Ausführungsform vor, daß das Kontaktteil die Laschen bildet oder sich bis in die Laschen erstreckt und daß in einer Lasche wenigstens eine Durchgangsbohrung und in der anderen Lasche wenigstens eine Gewindebohrung gebildet ist, die in Montageposition der Durchgangsbohrung gegenüberliegt, derart, daß die Laschen in Montageposition mittels wenigstens einer die Durchgangsbohrung durchsetzenden und in die Gewindebohrung eingreifenden Schraube aus elektrisch leitfähigem Material, vorzugsweise aus Metall, miteinander und mit dem Leiter, beispielsweise einem Erdungskabel verbindbar sind und so die Anschlußmittel bilden. Diese Ausführungsform ist besonders einfach herstellbar und schnell und damit kostengünstig montierbar. Das Anschließen des Leiters erfolgt dadurch, daß mittels wenigstens einer Schraube einerseits die Laschen miteinander verbunden werden und andererseits der Leiter, beispielsweise mit einer Anschlußöse, mit den Laschen elektrisch leitend verbunden wird.

Eine andere Weiterbildung der Ausführungsform mit den Dichtmitteln und dem einteilig ausgebildeten Grundkörper mit den Laschen sieht vor, daß an in Montageposition einander zugewandten Flächen der Laschen Dichtflächen gebildet sind, die ein elastisches Material aufweisen oder zwischen denen sich in Montageposition ein Dichtkörper aus elastischem Material befindet, wobei die Dichtflächen in Montageposition dichtend aneinander oder an dem Dichtkörper anliegen und in Umfangsrichtung des Grundkörpers dicht die Dichtlippen angrenzen. Auf diese Weise ist die Abdichtung weiter verbessert.

Eine weitere Ausführungsform sieht vor, daß das Kontaktteil aus Messing und/oder Sondermessing und/oder niedrig legiertem Kupfer besteht. Die elektrische Leitfähigkeit dieser Materialien ist besonders gut, so daß der elektrische Widerstand zwischen einem Leiter, beispielsweise einem Erdungskabel, und dem zu kontaktierenden Körper gering ist.

Die Erfindung wird nachfolgend anhand der beigefügten Zeichnung näher erläutert, in der Ausführungsbeispiele dargestellt sind.

### Es zeigt:

- Fig. 1: in schematischer Perspektivansicht ein erstes Ausführungsbeispiel einer erfindungsgemäßen Einrichtung in Form einer Schelle in Montageposition,
- Fig. 2: einen Axialschnitt durch die Einrichtung gemäß Fig. 1,
- Fig. 3: eine schematische Ansicht auf die radiale Innenfläche der Einrichtung gemäß Fig. 1,
- Fig. 4: einen schematischen Radialschnitt durch die Einrichtung gemäß Fig. 1 in Montageposition,
- Fig. 5: in gleicher Darstellung wie Fig. 3 ein zweites Ausführungsbeispiel der erfindungsgemäßen Einrichtung,
- Fig. 6: in gleicher Darstellung wie Fig. 4 die Einrichtung gemäß Fig. 5 in Montageposition,
- Fig. 7: in gleicher Darstellung wie Fig. 2 ein drittes Ausführungsbeispiel der erfindungsgemäßen Einrichtung,
- Fig. 8: in gleicher Darstellung wie Fig. 4 die Einrichtung gemäß Fig. 9.

In den Figuren der Zeichnung sind gleiche oder sich entsprechende Bauteile mit den gleichen Bezugszeichen versehen.

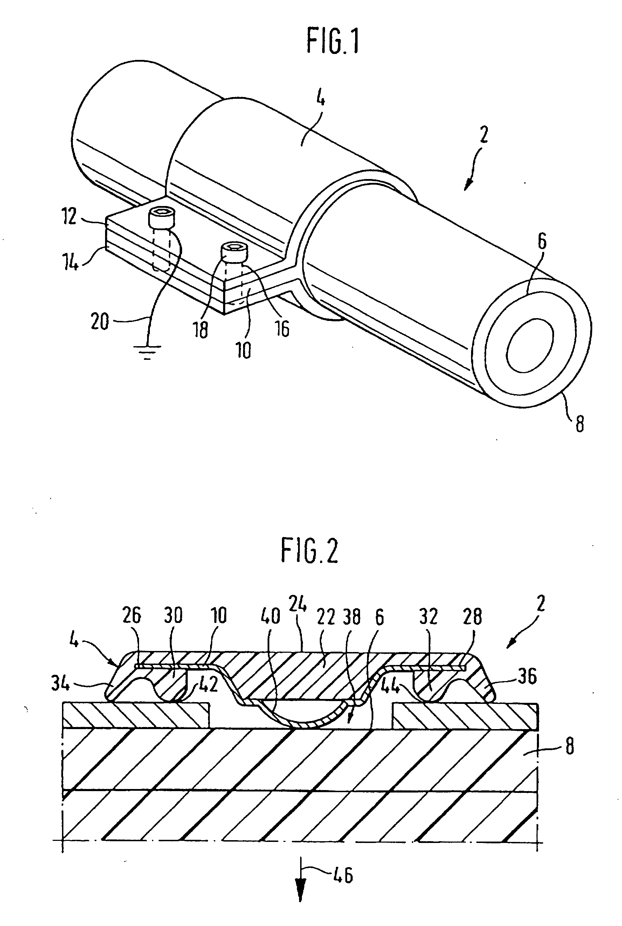

In Fig. 1 ist eine erfindungsgemäße Einrichtung 2 dargestellt, die einen biegsamen, als Schelle ausgebildeten Grundkörper 4 aufweist, der in der in Fig. 1 dargestellten Montageposition an einem leitenden Teil eines zu kontaktierenden Körpers anliegt, bei dem Ausführungsbeispiel gemäß Fig. 1 an einem abisolierten Außenleiter 6 eines Koaxialkabels 8, und diesen muffenförmig umgreift. Der Grundkörper 4 ist bei diesem Ausführungsbeispiel einteilig und in Umfangsrichtung offen ausgebildet und weist ein bandförmiges Kontaktteil 10 aus Metall auf, an dessen Enden abgewinkelte Laschen 12, 14 gebildet sind, die in Montageposition aneinander anliegen. In der Lasche 12 sind Durchgangsbohrungen 16 und in der Lasche 14 in der Zeichnung nicht erkennbare Gewindebohrungen gebildet, die in Montageposition den Durchgangsbohrungen 16 gegenüberliegen, derart, daß die Laschen 12, 14 in Montageposition mit die Durchgangsbohrungen 16 durchsetzenden und in die Gewindebohrungen eingreifenden Schrauben 18 aus Metall miteinander und mit einem Leiter, beispielsweise einem in der Zeichnung schematisch bei dem Bezugszeichen 20 angedeuteten Erdungskabel 20, verbindbar sind.

Der Grundkörper 4 weist ferner ein Teil 22 aus elastischem Material, beispielsweise einem Elastomer, insbesondere einem thermoplastischen Elastomer, auf.

Aus Fig. 2 ist ersichtlich, daß das Teil 22 aus elastischem Material eine radiale Außenfläche 24 des Grundkörpers 4 bildet und daß das Kontaktteil 10 mit seinen axialen Rändern 26, 28 in das elastische Material des Teiles 22 eingebettet ist. Durch das elastische Material des Teiles 22 sind auf der in Montageposition der zu kontaktierenden Körper zugewandten Seite 92 des Grundkörpers 4, bei dem Ausführungsbeispiel also an seiner radialen Innenfläche, in Axialrichtung des Grundkörpers 4 zueinander beabstandete Dichtlippen 30, 32 sowie jeweils in Axialrichtung außen an den Dichtlippen 30, 32 weitere Dichtlippen 34, 36 gebildet. Aus der Zeichnung ist nicht ersichtlich und deshalb wird hier erläutert, daß sich die Dichtlippen 30, 32 sowie die weiteren Dichtlippen 34, 36 in Umfangsrichtung des Grundkörpers 4 im wesentlichen über die gesamte Länge des Grundkörpers 4 in dieser Richtung erstrecken und in der in Fig. 1 dargestellten Montageposition der Einrichtung 2 dicht an der Ummantelung des Koaxialkabels 8 anliegen. Sie dichten einen in Montageposition der Einrichtung 2 zwischen dem Grundkörper 4 und dem zu kontaktierenden Koaxialkabel 8 gebildeten Raum, in dem sich ein Kontaktbereich 38 befindet, in dem eine elektrisch leitende Verbindung zwischen der Einrichtung 2 und dem Außenleiter 6 des Koaxialkabels 8 hergestellt ist, gegen ein Eindringen von Luft und/oder Feuchtigkeit ab.

Zur Herstellung einer elektrisch leitenden Verbindung zwischen der Einrichtung 2 und dem zu kontaktierenden Außenleiter 6 des Koaxialkabels 8 weist die Einrichtung 2 Kontaktvorsprünge auf, von denen in Fig. 2 lediglich ein mit dem Bezugszeichen 40 versehener Kontaktvorsprung erkennbar ist. Der Kontaktvorsprung 40 ist durch eine im Querschnitt zu dem Koaxialkabel 8 hin konvexe, in der Draufsicht im wesentlichen kreisförmige Profilierung in Form einer Wölbung gebildet.

Die Funktionsweise der erfindungsgemäßen Einrichtung 2 ist wie folgt:

Zum Herstellen einer elektrisch leitenden Verbindung zwischen dem zu kontaktierenden Außenleiter 6 des Koaxialkabels 8 und dem Erdungskabel 20 wird die Einrichtung 2 um einen abisolierten Bereich des Koaxialkabels 8 herumgelegt und mittels der Schrauben 18 gespannt. Hierbei gelangt der Grundkörper 4 mit Anlageflächen 42, 44, die durch Dichtflächen der Dichtlippen 30, 32 gebildet sind, an der Ummantelung des Koaxialkabels 8 zur Anlage. Der Kontaktvorsprung 40 steht in Richtung senkrecht zu den Anlageflächen 42, 44, also in einer in Fig. 2 durch einen Pfeil 46 symbolisierten Richtung in Montageposition zu dem Koaxialkabel 8 hin so weit über die Anlageflächen 42, 44 vor, daß er in dieser Montageposition an dem in Radialrichtung zurückspringenden Außenleiter 6 des Koaxialkabels 8 zur Anlage gelangt und auf diese Weise eine elektrisch leitende Verbindung zwischen dem Kontaktteil 10 und dem Außenleiter 6 herstellt. Dadurch, daß das Erdungskabel 20 über die Schrauben 18 mit dem Kontaktteil 10 verbunden ist, ist auf diese Weise die gewünschte elektrisch leitende Verbindung zwischen dem Erdungskabel 20 und dem Außenleiter 6 des Koaxialkabels 8 hergestellt, so daß der Außenleiter 6 geerdet ist.

Beim Spannen des Grundkörpers 4 wird der Kontaktvorsprung 40 elastisch verformt, derart, daß er in Montageposition elastisch federnd an dem Außenleiter 6 des Koaxialkabels 8 anliegt. Auf diese Weise ist eine sichere elektrische Verbindung zwischen dem Erdungskabel 20 und dem Außenleiter 6 hergestellt.

Dadurch, daß der Kontaktvorsprung 40 durch einen Teil des Grundkörpers 4 gebildet ist, ist ein separates Teil, beispielsweise ein Zwischenstück, nicht mehr erforderlich. Dies vereinfacht den Aufbau der erfindungsgemäßen Einrichtung 2 und gestaltet ihre Herstellung kostengünstiger.

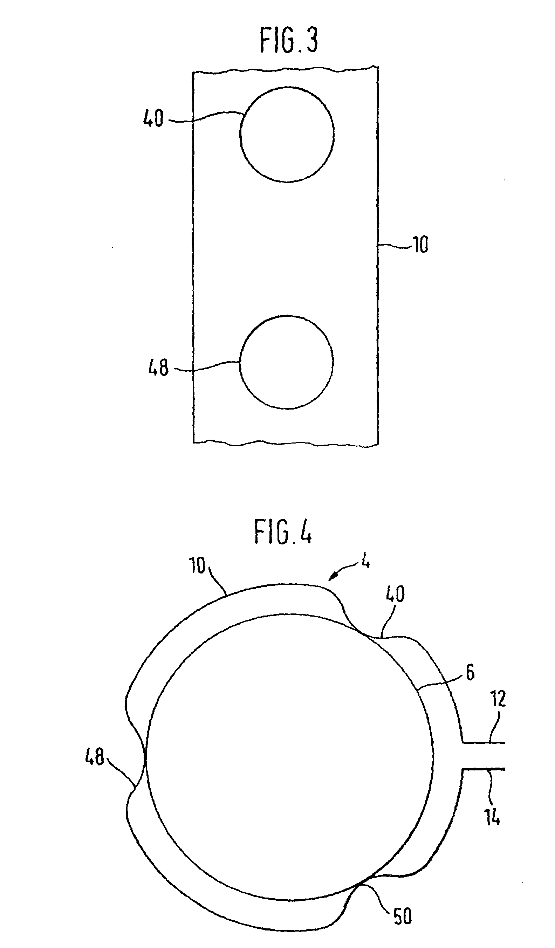

Aus Fig. 3, die eine Ansicht auf die radiale Innenfläche des Grundkörpers 4 zeigt, ist ersichtlich, daß der Kontaktvorsprung 40 und ein weiterer Kontaktvorsprung 48 jeweils durch eine in der Draufsicht kreisförmige Profilierung in dem Kontaktteil 10 gebildet ist.

Aus Fig. 4, die einen schematischen Radialschnitt durch die Einrichtung 2 zeigt, ist ersichtlich, daß neben den Kontaktvorsprüngen 40, 48 ein weiterer Kontaktvorsprung 50 vorhanden ist und daß die Kontaktvorsprünge 40, 48, 50 in Umfangsrichtung des Grundkörpers 4 zueinander gleich beabstandet sind.

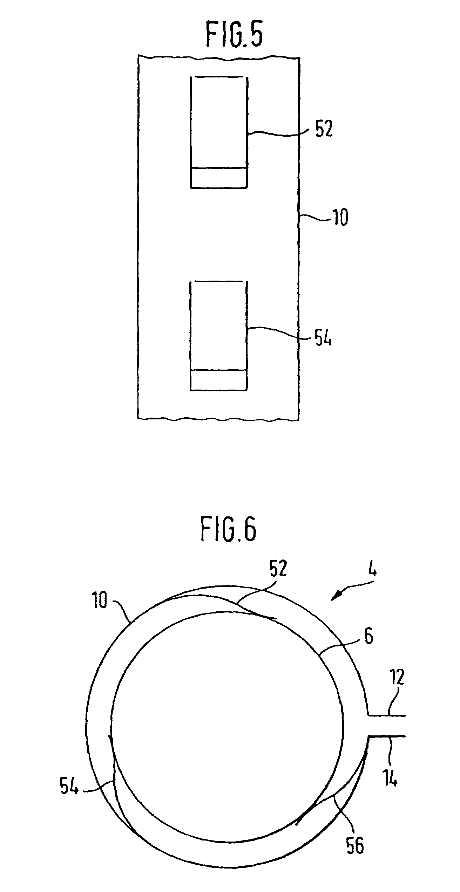

In Fig. 5 ist eine Ansicht auf die radiale Innenfläche eines zweiten Ausführungsbeispieles der erfindungsgemäßen Einrichtung 2 dargestellt, das sich von dem Ausführungsbeispiel gemäß Fig. 1 dadurch unterscheidet, daß die Kontaktvorsprünge durch Zungen 52, 54 gebildet sind, die aus dem Kontaktteil 10 ausgestanzt sind.

Aus Fig. 6, die einen Radialschnitt durch die Einrichtung gemäß Fig. 5 zeigt, ist ersichtlich, daß neben den Zungen 52, 54 noch eine weitere Zunge 56 vorgesehen ist, wobei die Zungen 52, 54, 56 in Umfangsrichtung des Grundkörpers 4 zueinander gleich beabstandet sind und zu der in Montageposition dem zu kontaktierenden Außenleiter 6 zugewandten Seite des Grundkörpers 4 hin ausgebogen sind und so weit vorstehen, daß sie an dem Außenleiter 6 elastisch federnd anliegen.

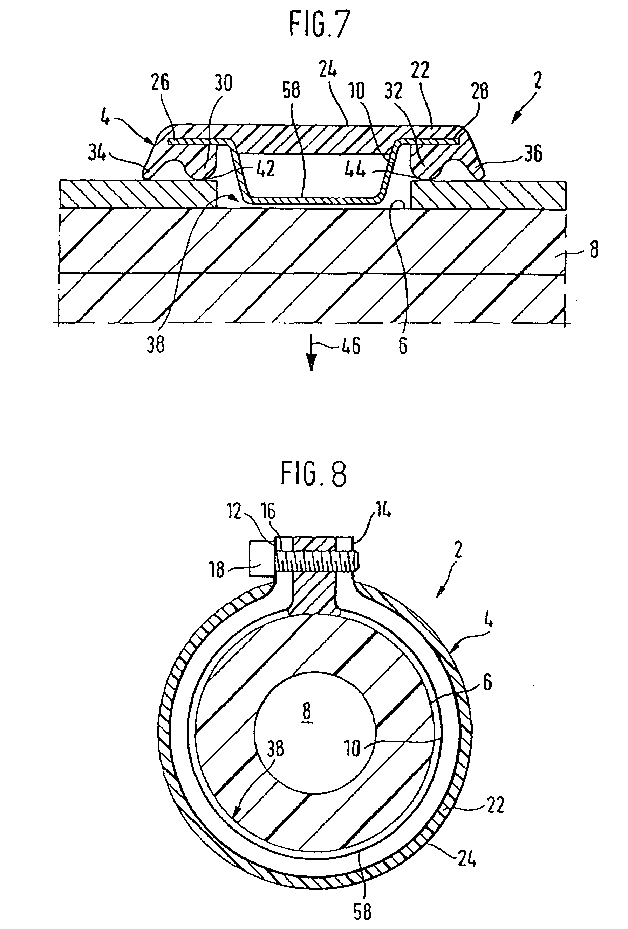

Fig. 7 zeigt einen Axialschnitt durch ein drittes Ausführungsbeispiel, das sich von dem Ausführungsbeispiel gemäß Fig. 7 im wesentlichen dadurch unterscheidet, daß das Teil 22 aus elastischem Material im Bereich der Sicke 58 mit Abstand zu dem Kontaktteil 10 angeordnet ist.

Fig. 8 zeigt einen Radialschnitt durch die Einrichtung 2 gemäß Fig. 4.

## Patentansprüche

1. Einrichtung (2) zum elektrisch leitenden Kontaktieren eines abschnittsweise abisolierten Außenleiters (6) eines Koaxialkabels (8), der gegenüber einer Ummantelung des Koaxialkabels (8) radial zurückspringt,
mit einem als um das Koaxialkabel (8) spannbare Schelle ausgebildeten Grundkörper (4),
mit Dichtlippen (30, 32), mit denen der Grundkörper (4) in Montageposition der Einrichtung (2) dichtend an der Ummantelung des Koaxialkabels (8) anliegt und
mit Kontaktmitteln zum Herstellen einer elektrisch leitenden Verbindung zwischen dem Außenleiter (6) des Koaxialkabels (8) und einem Leiter, beispielsweise einem Erdungskabel,
**dadurch gekennzeichnet**,
daß der Grundkörper (4) ein bandförmiges Kontaktteil (10) aus elektrisch leitfähigem Material aufweist,
daß an dem Kontaktteil (10) wenigstens ein einstückig mit dem Kontaktteil (10) ausgebildeter Kontaktvorsprung (40) aus elektrisch leitfähigem Material gebildet ist, der in Montageposition der Einrichtung (2) in Radialrichtung des Koaxialkabels (8) derart über die Dichtlippen (30, 32) vorsteht, daß er an dem Außenleiter (6) des Koaxialkabels (8) anliegt und so die Kontaktmittel bildet und
daß der oder jeder Kontaktvorsprung (40) elastisch verformbar ist, derart, daß er in Montageposition elastisch federnd an dem Außenleiter (6) des Koaxialkabels (8) anliegt.

2. Einrichtung nach Anspruch 1, **dadurch gekennzeichnet,** daß der oder jeder Kontaktvorsprung (40) durch ein mit dem Grundkörper (4) innig verbundenes Teil gebildet ist.

3. Einrichtung nach Anspruch 1 oder 2, **dadurch gekennzeichnet,** daß der oder jeder Kontaktvorsprung (40) aus Metall besteht.

4. Einrichtung nach einem der vorhergehenden Ansprüche, **gekennzeichnet durch** Federmittel zum Vorspannen des oder jedes Kontaktvorsprunges (40) in Richtung auf den Außenleiter (6) des Koaxialkabels (8).

5. Einrichtung nach einem der vorhergehenden Ansprüche, **dadurch gekennzeichnet**, daß der Grundkörper (4) biegsam ausgebildet ist.

6. Einrichtung nach Anspruch 1, **dadurch gekennzeichnet**, daß der oder jeder Kontaktvorsprung (40) durch eine in dem Kontaktteil gebildete Profilierung gebildet ist.

7. Einrichtung nach Anspruch 6, **dadurch gekennzeichnet**, daß die oder jede Profilierung durch eine in Montageposition zu dem zu kontaktierenden Körper (8) hin im Querschnitt konvexe, in der Draufsicht insbesondere kreisförmige Wölbung oder eine zu dem zu kontaktierenden Körper (8) hin vorstehende Sicke (58) gebildet ist.

8. Einrichtung nach Anspruch 1, **dadurch gekennzeichnet,** daß der oder jeder Kontaktvorsprung (40) durch eine zu der in Montageposition dem zu kontaktierenden Körper (8) zugewandten Seite des Grundkörpers (4) hin vorstehende Zunge (52) gebildet ist.

9. Einrichtung nach Anspruch 8, **dadurch gekennzeichnet,** daß die oder jede Zunge (52) aus dem Kontaktteil (10) ausgestanzt ist.

10. Einrichtung nach Anspruch 1, **dadurch gekennzeichnet**, daß ein Teil des Kontaktteiles (10) aus dem Grundkörper (4) zu dessen in Montageposition dem zu kontaktierenden Körper (8) abgewandter Seite herausgeführt ist oder daß das Kontaktteil (10) mit einem zu dieser Seite des Grundkörpers (4) herausgeführten Teil (66) elektrisch leitend verbunden ist.

11. Einrichtung nach Anspruch 1, **dadurch gekennzeichnet**, daß sich der oder jeder Kontaktvorsprung (40) in Umfangsrichtung des Grundkörpers (4) im wesentlichen über die gesamte Länge des Grundkörpers (4) in dieser Richtung erstreckt.

12. Einrichtung nach Anspruch 1, **dadurch gekennzeichnet**, daß wenigstens zwei in Umfangsrichtung des Grundkörpers (4) zueinander beabstandete, vorzugsweise auf einer Umfangslinie angeordnete Kontaktvorsprünge (40, 48, 50) vorgesehen sind.

13. Einrichtung nach Anspruch 1, **dadurch gekennzeichnet,** daß der Grundkörper (4) einteilig und in Umfangsrichtung offen ausgebildet ist und an seinen freien Enden abgewinkelte oder abgebogene Laschen (12, 14) aufweist, die in Montageposition miteinander verbindbar sind.

14. Einrichtung nach Anspruch 13, **dadurch gekennzeichnet**, daß die Laschen (12, 14) mittels einer Schraubvorrichtung oder einer Klemmvorrichtung miteinander verbindbar sind.

15. Einrichtung nach Anspruch 1, **dadurch gekennzeichnet**, daß der Grundkörper (4) ein Teil (22) aus elastischem Material aufweist, mit dessen in Montageposition dem zu kontaktierenden Körper (8) zugewandter Seite das Kontaktteil (10) verbunden ist.

16. Einrichtung nach Anspruch 15, **dadurch gekennzeichnet,** daß das Teil (22) aus elastischem Material eine Beschichtung des Kontaktteiles (10) bildet oder daß das Kontaktteil (10) wenigstens teilweise in das elastische Material eingebettet ist.

17. Einrichtung nach Anspruch 15, **dadurch gekennzeichnet**, daß das elastische Material ein Elastomer, insbesondere ein thermoplastisches Elastomer ist.

18. Einrichtung nach Anspruch 1, **dadurch gekennzeichnet,** daß das Kontaktteil (10) Anschlußmittel zum Anschließen eines Leiters, beispielsweise eines Erdungskabels (20) , aufweist, derart, daß der Leiter mit dem in Montageposition an dem zu kontaktierenden Körper (8) anliegenden Kontaktteil (10) zum Herstellen einer elektrisch leitenden Verbindung zwischen dem Leiter und dem zu kontaktierenden Körper (8) elektrisch leitend verbindbar ist.

19. Einrichtung nach Anspruch 13, **dadurch gekennzeichnet,** daß das Kontaktteil (10) die Laschen (12, 14) bildet oder sich bis in die Laschen (12, 14) erstreckt und daß in einer Lasche (12) wenigstens eine Durchgangsbohrung (16) und in der anderen Lasche (14) wenigstens eine Gewindebohrung gebildet ist, die in Montageposition der Durchgangsbohrung (16) gegenüberliegt, derart, daß die Laschen (12, 14) in Montageposition mittels wenigstens einer die Durchgangsbohrung (16) durchsetzenden und in die Gewindebohrung eingreifenden Schraube (18) aus elektrisch leitfähigem Material, vorzugsweise aus Metall, miteinander und mit dem Leiter, beispielsweise einem Erdungskabel (20), verbindbar sind und so die Anschlußmittel bilden.

20. Einrichtung nach Anspruch 1, **dadurch gekennzeichnet**, daß an in Montageposition einander zugewandten Flächen der Laschen (12, 14) Dichtflächen gebildet sind, die ein elastisches Material aufweisen oder zwischen denen sich in Montageposition ein Dichtkörper aus elastischem Material befindet, wobei die Dichtflächen in Montageposition dichtend aneinander oder an dem Dichtkörper anliegen und in Umfangsrichtung des Grundkörpers (4) dicht an die Dichtlippen angrenzen.

21. Einrichtung nach Anspruch 1, **dadurch gekennzeichnet**, daß das Kontaktteil (10) aus Messing und/oder Sondermessing und/oder niedrig legiertem Kupfer besteht bzw. bestehen.

## Claims

1. A device (2) for contacting in electrically conducting manner an outer conductor (6) of a coaxial cable (8), said outer conductor being bared in segments and radially recoiling from a jacket of the coaxial cable (8), said device comprising a base structure (4) which can be tensioned around the coaxial cable, further comprising sealing lips (30, 32) by means of which the baste structure (4) when in the mounted position of the device (2) shall rest in sealing manner against the jacket of the coaxial cable (8), and further comprising contact means to set up an electrically conducting connection between the outer conductor (6) of the coaxial cable (8) and a conductor, for instance a grounding cable,
characterized in that
the base structure (4) comprises a band-shaped, electrically conducting contact element (10) , in that at least one electrically conducting contact protrusion (40) integral with the contact element (10) is present at same and projects when in the mounted position of the device (2) in the radial direction of the coaxial cable (8) in such manner beyond the sealing lips (30, 32) that it shall rest against the outer conductor of the coaxial cable (8) and in this manner constitutes the contact means, and in that the, or each, contact protrusion (40) is elastically deformable in such manner that when in the mounted position it shall rest elastically against the outer conductor (6) of the coaxial cable (8).

2. Device as claimed in claim 1, characterized in that the - or each - contact protrusion (40) consists of a part firmly joined to the base structure (4).

3. Device as claimed in either of claims 1 and 2, characterized in that the - or each - contact protrusion (40) is metallic.

4. Device as claimed in one of the above claims, characterized by spring means to bias the - or each - contact protrusion (40) toward the body to be contacted (8).

5. Device as claimed in one of the above claims, characterized in that the base structure (4) is flexible.

6. Device as claimed in claim 1, characterized in that the - or each - contact protrusion (40) consists of an embossing in the contact element.

7. Device as claimed in claim 6, characterized in that the - or each - embossing is formed by a salient which is cross-sectionally convex toward the body to be contacted (8) in the assembly position or by a bead (58) projecting toward the body to be contacted (8).

8. Device as claimed in claim 1, characterized in that the - or each - contact protrusion (40) consists of a tongue (52) projecting toward a side of the base structure (4) facing the body to be contacted (8) in the assembly position.

9. Device as claimed in claim 8, characterized in that the - or each - tongue (52) is stamped out of the contact element (10).

10. Device as claimed in claim 1 , characterized in that part of the contact element (10) is led out the base structure (4) to its side away from the body to be contacted (8) in its assembly position or that the contact element (10) is electrically connected with a part (66) led out to this side of the base structure (4).

11. Device as claimed in claim 1, characterized in that the - or each - contact protrusion (40) runs in the circumferential direction of the base structure (4) substantially over the entire length of the base structure (4) in this direction.

12. Device as claimed in claim 1, characterized in that at least two contact protrusion (40, 48, 50) are mounted in mutually spaced manner in the circumferential direction of the base structure (4), preferably along one circumferential line.

13. Device as claimed in claim 1, characterized in that the base structure (4) is integral and circumferentially open and at its ends comprises brackets (12, 14) which are connectable in the assembly position.

14. Device as claimed in claim 13, characterized in that the brackets (12, 14) can be connected to each other by means of screws or a clamp.

15. Device as claimed in claim 1, characterized in that the base structure (4) comprises an elastic part (22) of which the side facing the body to be contacted (8) in the assembly position is connected to the contact element (10).

16. Device as claimed in claim 15, characterized in that the part (22) made of an elastic material constitutes a coating of the contact element (10) or in that the contact element (10) is imbedded at least in part in the elastic material.

17. Device as claimed in claim 15, characterized in that the elastic material is an elastomer, in particular a thermoplastic elastomer.

18. Device as claimed in claim 1, characterized in that the contact element (10) is fitted with terminals to hook up a conductor, for instance a grounding cable (20) in such manner that the conductor by means of the contact element (10) resting against the body to be contacted (8) in the assembly position can be connected in electrically conducting manner to the body to be contacted (8).

19. Device as claimed in claim 13, characterized in that the contact element (10) constitutes the brakkets (12, 14) or extends into the brackets (12, 14) and in that one bracket (12) comprises at least one aperture (16) and the other bracket (14) comprises at least one threaded borehole opposite the aperture (16) in the assembly position, in such manner that, in the assembly position, the brackets, (12, 14) by means of at least one electrically conducting metal screw (18) passing through the aperture (16) and engaging the threaded borehole, can be connected to each other and to the conductor, illustratively a grounding cable (20), and thereby form the hookup means.

20. Device as claimed in claim 1, characterized in that the sealing means comprise sealing surfaces constituted by mutually facing surfaces of the bracket (12, 14) in the assembly position and made of an elastic material or sandwiching an elastic sealing element between them in the assembly position, the sealing surfaces in the assembly position resting in sealing manner against each other or against the sealing body and tightly adjoining the sealing lips in the circumferential direction of the base structure (4).

21. Device as claimed in claim 1, characterized in that the contact element (10) is made of brass and/or high-strength brass and/or low-alloy copper.

## Revendications

1. Dispositif (2) pour la mise en contact électriquement conducteur d'un conducteur extérieur (6), isolé par sections, d'un câble coaxial (8) qui est en retrait radialement par rapport à une gaine du câble coaxial (8),
- avec un corps de base (4) formé en tant que collier de serrage pouvant être serré autour du câble coaxial (8),
- avec des lèvres d'étanchéité (30, 32) par lesquelles le corps de base (4) est, en position de montage du dispositif (2), en appui étanche sur la gaine du câble coaxial (8) et
- avec des moyens de contact pour établir une liaison électriquement conductrice entre le conducteur extérieur (6) du câble coaxial (8) et un conducteur, par exemple un câble de mise à la terre,
caractérisé en ce
- que le corps de base (4) présente une partie de contact (10) en forme de bande en un matériau électriquement conducteur,
- qu'au moins une saillie de contact (40) en matériau électriquement conducteur, d'une seule pièce avec la partie de contact (10) est formée sur la partie de contact (10), qui, en position du montage du dispositif (2), fait saillie au-dessus des lèvres d'étanchéité (30, 32) en direction radiale du câble coaxial (8) de telle sorte qu'elle est en appui sur le conducteur extérieur (6) du câble coaxial (8) et forme ainsi les moyens de contact et
- que la ou chaque saillie de contact (40) est déformable élastiquement de telle sorte que, en position de montage, elle est en appui élastique sur le conducteur extérieur (6) du câble coaxial (8).

2. Dispositif selon la revendication 1,
caractérisé en ce que la ou chaque saillie de contact (4) est formée par une partie reliée intimement au corps de base (4).

3. Dispositif selon la revendication 1 ou 2,
caractérisé en ce que la ou chaque saillie de contact (40) est constituée de métal.

4. Dispositif selon l'une des revendications précédentes,
caractérisé par des moyens de ressort pour précontraindre la ou chaque saillie de contact (40) en direction du conducteur extérieur (6) du câble coaxial (8).

5. Dispositif selon l'une des revendications précédentes,
caractérisé en ce que le corps de base (4) est réalisé souple.

6. Dispositif selon la revendication 1,
caractérisé en ce que la ou chaque saillie de contact (40) est formée par un profilage formé dans la partie de contact.

7. Dispositif selon la revendication 6,
caractérisé en ce que le ou chaque profilage est formé par un bombement convexe, en section transversale, en direction du corps (8) à contacter en position de montage, en particulier circulaire en vue de dessus, ou bien par une moulure (58) en saillie en direction du corps (8) à contacter.

8. Dispositif selon la revendication 1,
caractérisé en ce que la ou chaque saillie de contact (40) est formée par une languette (52) en saillie vers la face du corps de base (4) tournée vers le corps (8) à contacter en position de montage.

9. Dispositif selon la revendication 8,
caractérisé en ce que la ou chaque languette (52) est matricée dans la partie de contact (10).

10. Dispositif selon la revendication 1,
caractérisé en ce qu'une partie de la partie de contact (10) sort du corps de base (4) sur sa face écartée, en position de montage, du corps (8) à contacter ou bien que la partie de contact (10) est reliée à conduction électrique à une pièce (66) sortant de cette face du corps de base (4).

11. Dispositif selon la revendication 1,
caractérisé en ce que la ou chaque saillie de contact (40) s'étend en direction périphérique du corps de base (4) sensiblement sur toute la longueur du corps de base (4) dans cette direction.

12. Dispositif selon la revendication 1,
caractérisé en ce que sont prévues au moins deux saillies de contact (40, 48, 50) écartées les unes des autres en direction périphérique du corps de base (4), de préférence disposées sur une ligne périphérique.

13. Dispositif selon la revendication 1,
caractérisé en ce que le corps de base (4) est constitué d'une seule pièce et ouvert en direction périphérique et présente à ses extrémités libres des barrettes (12, 14) repliées ou recourbées qui peuvent être reliées entre elles en position de montage.

14. Dispositif selon la revendication 13,
caractérisé en ce que les barrettes (12, 14) peuvent être reliées entre elles au moyen d'un dispositif à vis ou d'un dispositif de serrage.

15. Dispositif selon la revendication 1,
caractérisé en ce que le corps de base (4) présente une partie (22) en matériau élastique à laquelle la partie de contact (10) est reliée par sa face tournée vers le corps (8) à contacter en position de montage.

16. Dispositif selon la revendication 15,
caractérisé en ce que la partie (22) en matériau élastique forme un revêtement de la partie de contact (10) ou bien que la partie de contact (10) est au moins partiellement enrobée dans le matériau élastique.

17. Dispositif selon la revendication 15,
caractérisé en ce que le matériau élastique est un élastomère, en particulier un élastomère thermoplastique.

18. Dispositif selon la revendication 1,
caractérisé en ce que la partie de contact (10) présente des moyens de raccordement pour raccorder un conducteur, par exemple un câble de mise à la terre (20), de telle manière que le conducteur peut être relié à conduction électrique à la partie de contact (10) en appui sur le corps (8) à contacter en position de montage, pour établir une liaison électriquement conductrice entre le conducteur et le corps (8) à contacter.

19. Dispositif selon la revendication 18,
caractérisé en ce que la partie de contact (10) forme les barrettes (12, 14) ou bien s'étend jusqu'aux barrettes (12, 14) et qu'au moins un alésage de passage (16) est formé dans une barrette (12) et au moins un alésage taraudé est formé dans l'autre barrette (14), lequel est opposé à l'alésage de passage (16) en position de montage, de telle sorte que les barrettes (12, 14) peuvent être, en position de montage, reliées entre elles et avec le conducteur, par exemple un câble de mise à la terre (20), au moyen d'au moins une vis (18) en matériau électriquement conducteur, de préférence en métal, traversant l'alésage de passage (16) et en prise dans l'alésage taraudé et forment ainsi les moyens de contact.

20. Dispositif selon la revendication 1,
caractérisé en ce que sur des surfaces des barrettes (12, 14) tournées l'une vers l'autre en position de montage sont formées des surfaces d'étanchéité qui présentent un matériau élastique ou entre lesquelles se trouve, en position de montage, un corps d'étanchéité en matériau élastique, les surfaces d'étanchéité étant, en position de montage, en appui étanche l'une sur l'autre ou sur le corps d'étanchéité et sont étroitement adjacentes aux lèvres d'étanchéité en direction périphérique du corps de base (4).

21. Dispositif selon la revendication 1,
caractérisé en ce que la partie de contact (10) est constituée de laiton et/ou de laiton à haute résistance et/ou de cuivre faiblement allié.
